# FASCICULE DE BREVET EUROPEEN

(11) **EP 2 408 612 B1**
(45) Date de publication et mention de la délivrance du brevet: **15.05.2013**
(21) Numéro de dépôt: 10707922.0
(22) Date de dépôt: 12.03.2010
(51) Int. Cl.: B29D 30/48, B60C 15/04, B29B 15/10, B60C 9/20

(54) **RENFORT COMPOSITE AUTO-ADHERENT, SON PROCÉDÉ DE FABRICATION ET BANDAGE PNEUMATIQUE**
SELBSTKLEBENDE VERBUNDVERSTÄRKUNG, HERSTELLUNGSVERFAHREN DAFÜR UND LUFTREIFEN
SELF-ADHESIVE COMPOSITE REINFORCEMEN, METHOD FOR MANUFACTURING THE SAME AND PNEUMATIC TYRE

(30) Priorité: 20.03.2009 FR 0951782
(43) Date de publication de la demande: 25.01.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CUSTODERO, Emmanuel, F-63400 Chamalieres (FR); RIGO, Sébastien, F-63410 Manzat (FR)
(74) Mandataire: Ribière, Joel
(86) Numéro de dépôt international: PCT/EP2010/053155
(87) Numéro de publication internationale: WO 2010/105975

(56) Documents cités:
- EP-A2- 1 577 121
- WO-A1-01/87577
- WO-A1-03/066353
- US-A- 4 754 794
- US-A- 5 702 548
- US-A1- 2006 147 731
- US-B1- 6 346 325

## Description

### DOMAINE DE L'INVENTION

Le domaine de la présente invention est celui des éléments de renforcement ou « renforts », notamment métalliques, utilisables pour renforcer des articles ou produits semi-finis en caoutchouc diène tels que par exemple des bandages pneumatiques.

La présente invention est plus particulièrement relative à des renforts de type hybride ou composite constitués d'au moins une âme, en particulier métallique, ladite âme étant gainée ou recouverte d'une ou plusieurs couches de matière thermoplastique.

### ETAT DE LA TECHNIQUE

Le gainage de renforts métalliques par des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

La demande de brevet EP 0 962 576 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques utilisables comme tringle dans un bourrelet de bandage pneumatique, ces fils ou câbles étant doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit.

Ainsi, les concepteurs d'articles en caoutchouc diénique, notamment les manufacturiers de bandages pneumatiques sont à la recherche aujourd'hui de nouveaux systèmes adhésifs ou de nouveaux renforts qui permettent de pallier tout ou partie des inconvénients précités.

### BREVE DESCRIPTION DE L'INVENTION

Or, au cours de leurs recherches, les Demanderesses ont découvert un renfort composite nouveau qui ne nécessite aucun traitement d'encollage pour adhérer au caoutchouc, en quelque sorte du type auto-adhérent par cuisson, et qui par conséquent permet de répondre à l'objectif ci-dessus.

En conséquence, un premier objet de l'invention concerne un renfort composite comportant :
- au moins un fil de renforcement ;
- recouvrant ledit fil, une première couche d'un polymère thermoplastique dont la température de transition vitreuse est positive ;
- recouvrant la première couche, une deuxième couche comportant un élastomère thermoplastique styrénique insaturé dont la température de transition vitreuse est négative.

On a constaté de manière inattendue que la présence de cet élastomère thermoplastique styrénique insaturé permettait d'assurer une adhésion directe et performante du renfort composite de l'invention à une matrice ou composition d'élastomère diénique telle que celles couramment utilisées dans des bandages pneumatiques.

L'invention concerne également un procédé de fabrication du renfort composite ci-dessus, ledit procédé comportant au moins les étapes suivantes :
- on recouvre le fil de renforcement par une couche du polymère thermoplastique dont la température de transition vitreuse est positive ;
- on dépose sur le fil ainsi recouvert une deuxième couche comportant l'élastomère thermoplastique styrénique insaturé dont la température de transition vitreuse est négative ;
- on soumet l'ensemble à un traitement thermo-oxydant pour solidariser les deux couches.

La présente invention concerne également l'utilisation du renfort composite de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles"*)*,* deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article ou produit semi-fini en caoutchouc, en particulier bandage pneumatique, comportant un renfort composite selon l'invention.

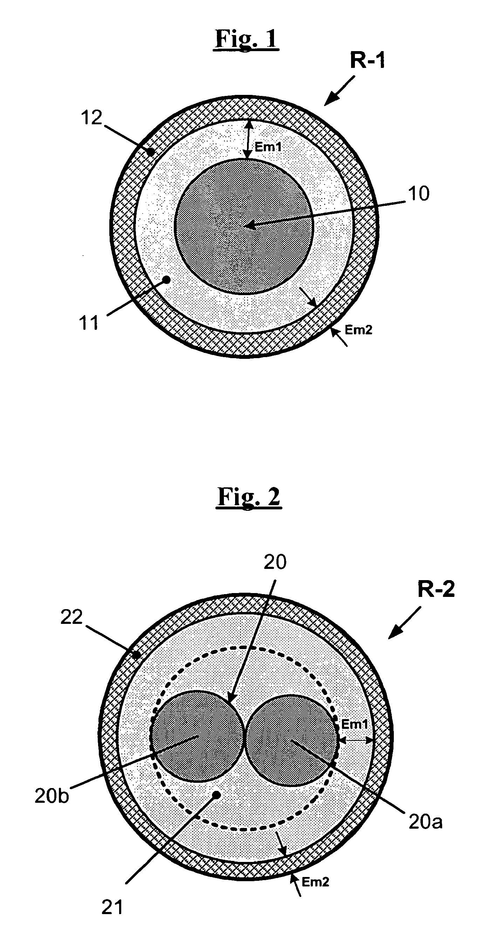

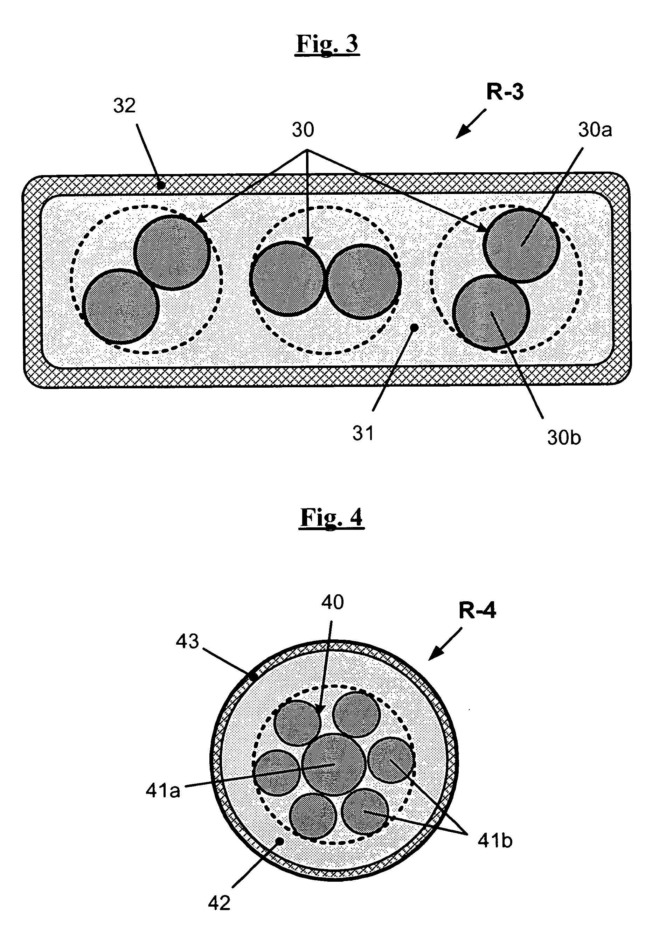

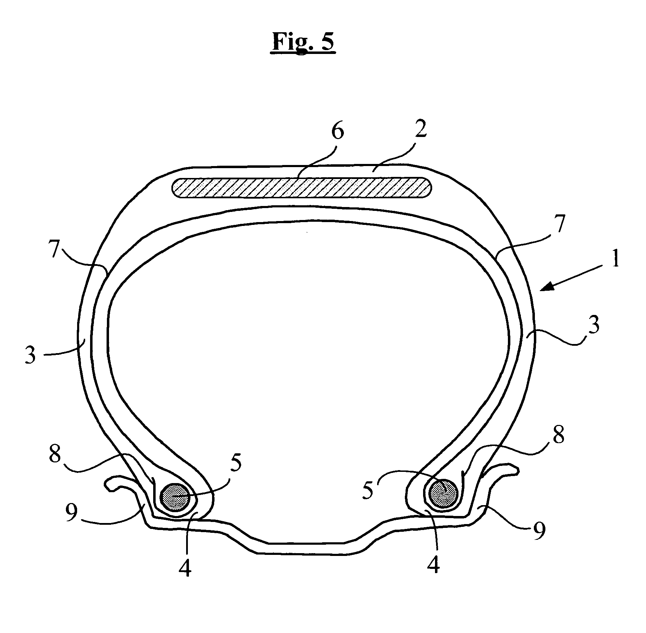

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un bandage pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement à une composition de caoutchouc insaturé et utilisable notamment pour le renforcement d'articles en caoutchouc diène tels que des bandages pneumatiques, a donc pour caractéristique de comporter :
- au moins un fil (c'est-à-dire un ou plusieurs fils) de renforcement ;
- recouvrant ledit fil (ou lesdits fils), une première couche d'un polymère thermoplastique dont la température de transition vitreuse (notée ci-après Tg₁) est positive (c'est-à-dire supérieure à 0°C) ;
- recouvrant ladite première couche, une deuxième couche d'un élastomère thermoplastique styrénique (en abrégé TPS) du type insaturé dont la température de transition vitreuse (notée ci-après Tg₂) est négative (c'est-à-dire inférieure à 0°C).

En d'autres termes, le renfort composite de l'invention comporte un seul fil ou plusieurs fils de renforcement, chaque fil de renforcement étant recouvert par deux couches de polymère thermoplastique distinctes et superposées. La structure du renfort de l'invention est décrite en détail ci-après.

Dans la présente demande, on entend de manière générale par fil de renforcement (*"reinforcing thread"*) tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut d'agir par exemple d'un monofilament élémentaire de diamètre important (par exemple et de préférence égal ou supérieur à 50 µm), d'un ruban élémentaire; d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type *"steel cords"* pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour " *Normal Tensile* "), à haute résistance (dit "HT" pour *"High Tensile* "), à très haute résistance (dit "SHT" pour *" Super High Tensile* ") comme à ultra-haute résistance (dit "UHT" pour *"Ultra High Tensile* ").

L'acier pourrait être revêtu d'une couche adhésive telle que du laiton ou du zinc. Toutefois, on peut avantageusement utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La première couche ou gaine recouvrant le ou chaque fil de renforcement est constituée par un polymère thermoplastique dont la Tg (Tg₁) est par définition positive, de préférence supérieure à +20°C, plus préférentiellement supérieure à +30°C. D'autre part, la température de fusion ("Tf") de ce polymère thermoplastique est préférentiellement supérieure à 100°C, plus préférentiellement supérieure à 150°C, notamment supérieure à 200°C.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6-6 (ou Nylon® 6-6).

La deuxième couche ou gaine recouvrant la première couche est constituée par un élastomère thermoplastique styrénique insaturé dont la Tg (Tg₂) est par définition négative, de préférence inférieure à - 20°C, plus préférentiellement inférieure à - 30°C.

Ainsi et selon un mode de réalisation préférentiel de l'invention, l'écart de températures de transition vitreuse (Tg₁ - Tg₂) entre le polymère thermoplastique et l'élastomère TPS insaturé est supérieur à 40°C, plus préférentiellement supérieur à 60°C.

On rappellera ici que les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthyléne/butylène).

C'est la raison pour laquelle, de manière connue, les copolymères TPS se caractérisent généralement par la présence de deux pics de transition vitreuse, le premier pic (température la plus basse, négative, correspondant à Tg₂) étant relatif à la séquence élastomère du copolymère TPS, le second pic (température la plus haute, positive, typiquement aux alentours de 80°C) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/styrène).

Ceci étant rappelé, une caractéristique essentielle de l'élastomère TPS utilisé dans le renfort composite de l'invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

De préférence, l'élastomère insaturé est un copolymère comportant des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/butadiène/ isoprène/ styrène (SBIS) et les mélanges de ces copolymères.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part de la couche du polymère thermoplastique, d'autre part de l'élastomère diénique auquel est destiné le renfort d'autre part. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000. La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Des élastomères TPS insaturés tels que par exemple SBS, SBBS, SIS ou SBIS sont bien connus et disponibles commercialement, par exemple auprès de la société Kraton sous la dénomination "Kraton D" (e.g., produits D 1161, D 1118, D1116, D1163 pour des exemples d'élastomères SIS et SBS), auprès de la société Dynasol sous la dénomination "Calprene" (e.g., produits C405, C411, C412 pour des exemples d'élastomères SBS) ou encore auprès de la société Asahi sous la dénomination "Tuftec" (e.g., produit P1500 pour un exemple d'élastomère SBBS).

La Tg des polymères thermoplastiques ci-dessus (Tg₁ et Tg₂) est mesurée de manière connue par DSC (*Differential Scanning Calorimetry*)*,* par exemple et sauf indications différentes spécifiées dans la présente demande, selon la norme ASTM D3418 de 1999.

La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une première couche (11) d'un polymère thermoplastique dont la Tg (Tg₁) est positive, par exemple en polyamide ou en polyester, dont l'épaisseur minimale est notée Eₘ₁ sur cette figure 1. Une deuxième couche (12) d'un élastomère TPS insaturé, par exemple SBS, SBBS, SIS ou SBIS, dont la Tg (Tg₂) est négative, vient recouvrir la première couche (11) ; son épaisseur minimale est notée Eₘ₂ sur la figure 1.

La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou monofilaments (20a, 20b) de diamètre relativement élevé (par exemple entre 0,10 et 0,50 mm) retordus ou câblés ensemble, par exemple en acier au carbone ; le fil de renforcement (20) est recouvert d'une première couche (21) d'un polymère thermoplastique dont la Tg (Tg₁) est positive, par exemple en polyamide 6-6 ou en polyester, d'épaisseur minimale Eₘ₁. Une deuxième couche (22) d'un élastomère TPS insaturé, par exemple SBS ou SIS, dont la Tg (Tg₂) est négative, d'épaisseur minimale Eₘ₂ vient recouvrir la première couche (21).

La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une première couche (31) d'un polymère thermoplastique dont la Tg (Tg₁) est positive, par exemple en polyamide ou en polyester. Une deuxième couche (32) d'un élastomère TPS insaturé, par exemple SBS, SBBS, SIS ou SBIS, dont la Tg (Tg₂) est négative, vient recouvrir la première couche (31).

La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une première couche (42) d'un polyamide 6-6, elle-même recouverte d'une deuxième couche (43) d'un élastomère SBS.

Dans les renforts composites conformes à l'invention tels que ceux schématisés par exemple dans les figures 1 à 4 ci-dessus, l'épaisseur minimale des deux couches (Eₘ₁ et Eₘ₂) peut varier dans une très large mesure en fonction des conditions particulières de réalisation de l'invention.

L'épaisseur minimale Eₘ₁ de la première couche est de préférence comprise entre 1 µm et 2 mm, plus préférentiellement entre 10 µm et 1 mm.

Selon des modes de réalisation particuliers de l'invention, l'épaisseur minimale Eₘ₂ de la deuxième couche peut être du même ordre de grandeur que celle de la première couche (cas d'une deuxième couche épaisse d'une épaisseur comprise par exemple entre 1 µm et 2 mm, en particulier entre 10 µm et 1 mm), ou bien être notablement différente.

Selon un autre mode de réalisation particulier, la deuxième couche pourrait constituer par exemple une couche adhésive fine ou ultrafine, déposée par exemple non par extrusion mais par une technique d'enduction, par pulvérisation, ou autre technique de dépôt de film mince ou ultra-mince, par exemple d'épaisseur comprise entre 0,02 µm et 1 µm, en particulier entre 0,05 µm et 0,5 µm.

Dans le cas où plusieurs fils de renforcement sont utilisés, les première et deuxième couches peuvent être déposées individuellement sur chacun des fils de renforcement (pour rappel, que ces fils de renforcement soit unitaires ou pas), comme illustré par exemple aux figures 1, 2 et 4 commentées précédemment. Mais les première et deuxième couches peuvent être aussi déposées collectivement sur plusieurs des fils de renforcement disposés de manière appropriée, par exemple alignés selon une direction principale, comme illustré par exemple à la figure 3.

Le renfort composite de l'invention est préparé selon un procédé spécifique comportant au moins les étapes suivantes :
- au cours d'une première étape, on soumet tout d'abord au moins un fil de renforcement à un premier recouvrement par la première couche de polymère thermoplastique dont la température de transition vitreuse est positive ;
- puis, au cours d'une deuxième étape, on dépose sur le ou les fil(s) de renforcement ainsi recouvert(s) une deuxième couche de l'élastomère TPS insaturé dont la température de transition vitreuse est négative ;
- on soumet enfin l'ensemble à un traitement thermo-oxydant pour solidariser les deux couches.

Les deux premières étapes sont conduites de manière connue de l'homme du métier, en ligne et en continu, ou pas ; elles consistent par exemple simplement à faire passer le fil de renforcement, à travers des filières de diamètre adapté, dans des têtes d'extrusion chauffées à des températures appropriées.

Selon un mode de réalisation préférentiel, le ou les fils de renforcement sont préalablement chauffés, par exemple par induction ou par rayonnement IR, avant passage dans les têtes d'extrusion respectives. En sortie de chaque tête d'extrusion, le ou les fils de renforcement ainsi gainés sont ensuite refroidis suffisamment de manière à solidifier la couche de polymère respective, par exemple avec de l'air ou un autre gaz froid, ou par passage dans un bain d'eau suivi d'une étape de séchage.

L'étape suivante consiste en un traitement thermo-oxydant. Par traitement "thermo-oxydant" on entend par définition un traitement thermique en présence d'oxygène, par exemple de l'oxygène de l'air. Sans traitement thermo-oxydant, il s'est avéré impossible d'obtenir une adhésion acceptable de la deuxième couche TPS à la première couche de polymère thermoplastique ; par exemple, un traitement thermique sous vide s'est avéré totalement inefficace.

A titre d'exemple, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une première couche de polyamide 6-6 d'épaisseur maximale égale à environ 0,4 mm, pour l'obtention d'un fil de renforcement gainé ayant un diamètre total d'environ 1 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 300°C. Le polyamide, fondu à une température de 290°C dans l'extrudeuse, recouvre ainsi le fil de renforcement, par le biais de la tête de gainage, à une vitesse de défilement du fil égale typiquement à plusieurs dizaines de m/min, pour un débit de pompe d'extrusion typiquement de plusieurs dizaines de cm³/min. En sortie de ce premier gainage, le fil peut être immergé dans un bac de refroidissement rempli d'eau froide, pour solidifier et figer le polyamide dans son état amorphe, puis séché par exemple par passage de la bobine de réception à l'étuve.

Le fil ainsi recouvert de polyamide est ensuite recouvert de l'élastomère TPS insaturé selon un mode de réalisation adapté à l'épaisseur visée pour la deuxième couche.

A titre de premier exemple, dans le cas où l'épaisseur visée de la deuxième couche est de 0,1 mm environ, le fil recouvert de polyamide 6-6 peut être repassé à travers une ligne d'extrusion-gainage dans laquelle la tête de gainage est portée à une température de 200°C, et est équipée d'une première contre-filière de 1,1 mm de diamètre et d'une seconde filière de 1,2 mm de diamètre. L'élastomère TPS insaturé, porté par exemple à une température d'environ 180°C dans l'extrudeuse, recouvre ainsi le fil, par le biais de la tête de gainage, à une vitesse de défilement typiquement de quelques mètres à quelques dizaines de m/min, pour un débit de pompe d'extrusion typiquement de plusieurs cm³/min à plusieurs dizaines de cm³/min.

A titre de deuxième exemple, dans le cas où l'épaisseur visée de la deuxième couche est très nettement inférieure, par exemple égale à quelques dizaines de nanomètre, le fil recouvert de polyamide 6-6 passe, par exemple à une vitesse de quelques m/min ou dizaines de m/min et sur une longueur de quelques cm ou dizaines de cm, entre deux feutrines de laine pressées par une masse de 1 kg et imbibées en continu par l'élastomère TPS dilué dans un solvant approprié (par exemple SBS dilué à 5 % dans du toluène), afin de recouvrir ainsi le tout d'une couche ultra-fine d'élastomère TPS (SBS).

Pour les deux étapes de gainage successives décrites ci-dessus, le câble (fil de renforcement) est avantageusement préchauffé avant passage dans les têtes d'extrusion, par exemple par passage à travers un générateur HF ou à travers un tunnel chauffant.

A l'issue de la seconde opération, soit par exemple directement en sortie de la tête de gainage ou du bain d'enduction précédemment décrits selon des modes de réalisation particuliers de l'invention, le fil composite traverse un four-tunnel, par exemple de plusieurs mètres de long, pour y subir un traitement thermique sous air.

Cette température de traitement est par exemple comprise entre 150°C et 300°C, pour des durées de traitement de quelques secondes à quelques minutes selon les cas, étant entendu que la durée du traitement sera d'autant plus courte que la température sera élevée, et que le traitement thermique ne doit évidemment pas conduire à une refusion ou même un ramollissement excessif des matières thermoplastiques utilisées.

Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster la température et la durée du traitement en fonction des conditions particulières de mise en oeuvre de l'invention, notamment de la nature exacte du renfort composite fabriqué, notamment selon que l'on traite des monofilaments pris individuellement, des câbles constitués de plusieurs monofilaments ou des groupes de tels monofilaments ou câbles tels que des bandelettes.

En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle du renfort, plus exactement de sa seconde couche d'élastomère TPS, pour renforcer encore sa propre cohésion, notamment dans les cas où ce renfort composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (e.g. huile de lin) dans l'élastomère TPS, par exemple au cours de son extrusion, ou encore en introduisant dans l'élastomère TPS un système de vulcanisation(i.e., à base de soufre).

Une réticulation pourra être également obtenue lors de la cuisson des bandages pneumatiques (ou plus généralement des articles en caoutchouc) que le renfort composite de l'invention est destiné à renforcer, grâce au propre système de réticulation présent dans les compositions de caoutchouc diénique constitutives de tels bandages (ou articles) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un bandage pneumatique. Il est avantageusement utilisable pour le renforcement de bandages pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 de l'invention a par exemple pour caractéristique essentielle qu'au moins une de ses armature de sommet ou de carcasse comporte un renfort composite selon l'invention. Selon un autre exemple de mode de réalisation possible de l'invention, ce sont les tringles 5 qui pourraient être constituées d'un renfort composite selon l'invention.

### EXEMPLE DE REALISATION DE L'INVENTION

### Essai 1 - Fabrication des renforts composites

On fabrique tout d'abord des renforts composites, conformes ou non à l'invention, de la manière suivante. Le fil de renforcement de départ est un câble d'acier (dit *"steel cord"*) pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par du polyamide 6-6 ("ZYTEL E40 NCO10" de la société DuPont de Nemours ; température de fusion Tf égale à environ 260°C) est réalisé sur une ligne d'extrusion-gainage par passage à travers une tête d'extrusion portée à une température de 300°C et comportant deux filières, une filière amont de diamètre 0,63 mm et une filière aval de diamètre 0,92 mm. Le polyamide porté à une température égale à environ 290°C dans l'extrudeuse (débit de pompe de 20 cm³/min) recouvre ainsi le fil (préchauffé à environ 280-290°C par passage à travers un générateur HF) défilant à une vitesse de 30 m/min. En sortie de la tête de gainage, le renfort composite obtenu est immergé en continu dans un bac de refroidissement rempli d'eau à 5°C pour le figer dans son état amorphe, puis séché par une buse d'air.

A ce stade de la fabrication, on obtient un renfort composite témoin (donc non conforme à l'invention) constitué du câble d'acier de départ gainé uniquement de sa première couche de polyamide. Ce renfort composite témoin (noté R-5) a un diamètre total (i.e., une fois gainé) d'environ 1,0 mm.

Puis, au cours d'une deuxième étape, on dépose sur le câble ainsi gainé une deuxième couche d'un élastomère thermoplastique SBS ("D1118" de la société Kraton) dont l'épaisseur minimale (Eₘ₂) visée est égale à environ 0,1 mm, de la manière suivante : le câble recouvert de polyamide 6-6 (préchauffé à environ 100°C par passage dans un tunnel chauffant) est repassé à travers une seconde ligne d'extrusion-gainage dans laquelle la tête de gainage est portée à une température de 200°C et est équipée d'une filière amont de diamètre 1,1 mm et d'une filière aval de diamètre 1,2 mm. L'élastomère SBS, porté à une température de 180°C dans l'extrudeuse, recouvre ainsi le câble, par le biais de la tête de gainage (débit de pompe 2 cm³/min), à une vitesse de défilement de 3 m/min.

Les températures de transition vitreuse, Tg₁ et Tg₂, des deux polymères utilisés ci-dessus sont respectivement égales à environ + 50°C et - 95°C (appareil DSC "822-2" de Mettler Toledo ; atmosphère Hélium ; échantillons préalablement portés de la température ambiante (20°C) à 100°C (20°C/min), puis refroidis rapidement jusqu'à -140°C, avant enregistrement final de la courbe de DSC de -140°C à +250°C à 20°C/min.

A l'issue de ce deuxième gainage, on soumet l'ensemble (renfort composite doublement gainé) à un traitement thermo-oxydant d'une durée d'environ 100 s, par passage à 3 m/min dans un four-tunnel, sous atmosphère ambiante, porté à une température de 270°C. A ce stade final de la fabrication, on obtient un renfort composite conforme à l'invention, constitué du câble d'acier de départ gainé de sa première couche de polyamide et de sa deuxième couche d'élastomère SBS. Le renfort composite conforme à l'invention ainsi préparé (renfort R-2 tel que schématisé à la figure 2) a un diamètre final total d'environ 1,1 mm.

Dans l'essai ci-dessus, pour déterminer les meilleures conditions opératoires du traitement thermo-oxydant, on a réalisé préalablement un balayage en température de 160°C à 280°C, pour quatre durées de traitement (50 s, 100 s, 200 s et 400 s).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 20°C). On caractérise les niveaux d'adhésion en mesurant la force dite d'arrachage (notée Fₘₐₓ) pour arracher les renforts de l'éprouvette (moyenne sur 15 tractions).

On a constaté que le renfort composite de l'invention, malgré le fait qu'il soit dépourvu de colle RFL (ou toute autre colle), présentait une force d'arrachage Fₘₐₓ élevée, égale à environ 60% de la force d'arrachage de référence mesurée sur le renfort composite témoin gainé de nylon (R-5) et encollé avec une colle conventionnelle RFL.

Dans les mêmes conditions, le renfort composite témoin (R-5) gainé de nylon mais dépourvu de colle RFL (ou toute autre colle), présentait une adhésion nulle au caoutchouc (force d'arrachage égale pratiquement à zéro).

Le résultat obtenu sur le renfort composite de l'invention est remarquable et inattendu pour l'homme du métier, d'autant plus que, avant traitement thermo-oxydant, la force d'arrachage du même renfort composite s'est révélée elle aussi pratiquement égale à zéro.

Des essais complémentaires ont démontré par ailleurs que l'utilisation de l'élastomère TPS insaturé (SBS), non pas comme (deuxième) couche de gainage mais comme additif incorporé à la composition de caoutchouc de calandrage (donc toujours au contact du renfort composite), n'apportait aucune contribution adhésive.

En conséquence, le renfort composite de l'invention par son caractère auto-adhérent constitue une alternative intéressante, et tout à fait crédible compte tenu des niveaux d'adhésion obtenus, aux renforts composites de l'art antérieur gainés par une matière thermoplastique telle que polyamide ou polyester, nécessitant de manière connue l'emploi d'une colle du type RFL pour assurer leur adhésion au caoutchouc.

## Revendications

1. Renfort composite (R-1,R-2) comportant :
- au moins un fil de renforcement (10,21) ;
- recouvrant ledit fil, une première couche d'un polymère thermoplastique (11,21) dont la température de transition vitreuse est positive ;
- recouvrant la première couche, une deuxième couche (12,22) comportant un élastomère thermoplastique styrénique insaturé dont la température de transition vitreuse est négative.

2. Renfort selon la revendication 1, dans lequel la température de transition vitreuse du polymère thermoplastique est supérieure à +20°C.

3. Renfort selon la revendication 1 ou 2, dans lequel la température de transition vitreuse de l'élastomère thermoplastique styrénique insaturé est inférieure à -20°C.

4. Renfort selon l'une quelconque des revendications 1 à 3, dans lequel l'écart de température de transition vitreuse entre le polymère thermoplastique et l'élastomère thermoplastique styrénique insaturé est supérieur à 60°C.

5. Renfort selon l'une quelconque des revendications 1 à 4, dans lequel le polymère thermoplastique est un polyamide aliphatique ou un polyester.

6. Renfort selon la revendication 5, dans lequel le polymère thermoplastique est un polyamide 6-6.

7. Renfort selon l'une quelconque des revendications 1 à 6, dans lequel l'élastomère thermoplastique est un copolymère comportant des blocs styrène et des blocs diène.

8. Renfort selon la revendication 7, dans lequel les blocs diène sont des blocs isoprène ou butadiène.

9. Renfort selon la revendication 8, dans lequel l'élastomère thermoplastique est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

10. Renfort selon la revendication 9, dans lequel l'élastomère thermoplastique est un copolymère SBS ou SIS, de préférence SBS.

11. Renfort selon l'une quelconque des revendications 1 à 10, dans lequel l'élastomère thermoplastique comprend entre 5 et 50% en masse de styrène.

12. Renfort selon l'une quelconque des revendications 1 à 11, dans lequel le fil de renforcement est un fil métallique.

13. Renfort selon la revendication 12, dans lequel le fil métallique est un fil en acier au carbone.

14. Bandage pneumatique comportant un renfort composite selon l'une quelconque des revendications 1 à 13.

15. Procédé de fabrication d'un renfort composite selon l'une quelconque des revendications 1 à 13, susceptible d'adhérer à une matrice de caoutchouc diénique, **caractérisé en ce qu'**il comporte au moins les étapes suivantes :
- on recouvre le fil de renforcement par une couche du polymère thermoplastique dont la température de transition vitreuse est positive ;
- on dépose sur le fil ainsi recouvert une deuxième couche comportant l'élastomère thermoplastique styrénique insaturé dont la température de transition vitreuse est négative ;
- on soumet l'ensemble à un traitement thermo-oxydant pour solidariser les deux couches.

## Patentansprüche

1. Verbundverstärkung (R-1, R-2), die Folgendes umfasst:
- wenigstens eine Verstärkungsfaser (10, 20);
- eine die Faser bedeckende erste Schicht (11, 21) aus einem thermoplastischen Polymer, dessen Glasübergangstemperatur positiv ist;
- eine die erste Schicht bedeckende zweite Schicht (12, 22), die ein nicht gesättigtes, styrolartiges, thermoplastisches Elastomer enthält, dessen Glasübergangstemperatur negativ ist.

2. Verstärkung nach Anspruch 1, wobei die Glasübergangstemperatur des thermoplastischen Polymers größer als +20 °C ist.

3. Verstärkung nach Anspruch 1 oder 2, wobei die Glasübergangstemperatur des nicht gesättigten styrolartigen thermoplastischen Elastomers kleiner als -20 °C ist.

4. Verstärkung nach einem der Ansprüche 1 bis 3, wobei der Abstand der Glasübergangstemperatur zwischen dem thermoplastischen Harz und dem nicht gesättigten, styrolartigen, thermoplastischen Elastomer größer als 60 °C ist.

5. Verstärkung nach einem der Ansprüche 1 bis 4, wobei das thermoplastische Polymer ein aliphatisches Polyamid oder ein Polyester ist.

6. Verstärkung nach Anspruch 5, wobei das thermoplastische Polymer ein 6-6-Polyamid ist.

7. Verstärkung nach einem der Ansprüche 1 bis 6, wobei das thermoplastische Elastomer ein Copolymer ist, das Styrolblöcke und Dienblöcke enthält.

8. Verstärkung nach Anspruch 7, wobei die Dienblöcke Isoprenblöcke oder Butadienblöcke sind.

9. Verstärkung nach Anspruch 8, wobei das thermoplastische Elastomer aus der Gruppe gewählt ist, die besteht aus Copolymeren von Styrol-/Butadien-Blöcken (SB), Styrol-/Isopren-Blöcken (SI), Styrol-/Butadien-/Butylen-Blöcken (SBB), Styrol-/Butadien-/Isopren-Blöcken (SBI), Styrol-/Butadien-/Styrol-Blöcken (SBS), Styrol-/Butadien-/Butylen-/Styrol-Blöcken (SBBS), Styrol-/Isopren-/Styrol-Blöcken (SIS), Styrol-/Butadien-/Isopren-/Styrol-Blöcken (SBIS) und aus Gemischen dieser Copolymere.

10. Verstärkung nach Anspruch 9, wobei das thermoplastische Elastomer ein SBS- oder SIS-Copolymer, vorzugsweise ein SBS-Copolymer ist.

11. Verstärkung nach einem der Ansprüche 1 bis 10, wobei das thermoplastische Elastomer 5 bis 50 Massen-% Styrol enthält.

12. Verstärkung nach einem der Ansprüche 1 bis 11, wobei die Verstärkungsfaser eine Metallfaser ist.

13. Verstärkung nach Anspruch 12, wobei die Metallfaser eine Kohlenstoffstahlfaser ist.

14. Radreifen, der eine Verbundverstärkung nach einem der Ansprüche 1 bis 13 umfasst.

15. Verfahren für die Herstellung einer Verbundverstärkung nach einem der Ansprüche 1 bis 13, die an einem Dienkautschuk-Kunststoff haften kann, **dadurch gekennzeichnet, dass** es wenigstens die folgenden Schritte umfasst:
- Bedecken der Verstärkungsfaser mit einer Schicht eines thermoplastischen Polymers, dessen Glasübergangstemperatur positiv ist;
- Ablagern auf der so bedeckten Faser einer zweiten Schicht, die ein nicht gesättigtes styrolartiges thermoplastisches Elastomer enthält, dessen Glasübergangstemperatur negativ ist;
- Unterwerfen der Gesamtheit unter eine thermooxidierende Behandlung, um die zwei Schichten aneinander zu befestigen.

## Claims

1. Composite reinforcement (R-1, R-2) comprising:
- at least one reinforcing thread (10, 20);
- a first layer (11,21) of a thermoplastic polymer, the glass transition temperature of which is positive, covering said thread; and
- a second layer (12, 22) comprising an unsaturated thermoplastic styrene elastomer, the glass transition temperature of which is negative, covering the first layer.

2. Reinforcement according to Claim 1, in which the glass transition temperature of the thermoplastic polymer is above +20°C.

3. Reinforcement according to Claim 1 or 2, in which the glass transition temperature of the unsaturated thermoplastic styrene elastomer is below -20°C.

4. Reinforcement according to any one of Claims 1 to 3, in which the difference in glass transition temperature between the thermoplastic polymer and the unsaturated thermoplastic styrene elastomer is greater than 60°C.

5. Reinforcement according to any one of Claims 1 to 4, in which the thermoplastic polymer is an aliphatic polyamide or a polyester.

6. Reinforcement according to Claim 5, in which the thermoplastic polymer is a 6,6 polyamide.

7. Reinforcement according to any one of Claims 1 to 6, in which the thermoplastic elastomer is a copolymer comprising styrene blocks and diene blocks.

8. Reinforcement according to Claim 7, in which the diene blocks are isoprene or butadiene blocks.

9. Reinforcement according to Claim 8, in which the thermoplastic elastomer is chosen within the group consisting of styrene/butadiene (SB), styrene/isoprene (SI), styrene/butadiene/ butylene (SBB), styrene/butadiene/isoprene (SBI), styrene/butadiene/styrene (SBS), styrene/ butadiene/butylene/styrene (SBBS), styrene/isoprene/styrene (SIS), styrene/butadiene/ isoprene/styrene (SBIS) block copolymers and blends of these copolymers.

10. Reinforcement according to Claim 9, in which the thermoplastic elastomer is an SBS or SIS copolymer, preferably an SBS copolymer.

11. Reinforcement according to any one of Claims 1 to 10, in which the thermoplastic elastomer comprises between 5 and 50% styrene by weight.

12. Reinforcement according to any one of Claims 1 to 11, in which the reinforcing thread is a metal wire.

13. Reinforcement according to Claim 12, in which the metal wire is a carbon steel wire.

14. Pneumatic tyre comprising a composite reinforcement according to any one of Claims 1 to 13.

15. Process for manufacturing a composite reinforcement according to any one of Claims 1 to 13, capable of adhering to a diene rubber matrix, **characterized in that** it comprises at least the following steps:
- the reinforcing thread is covered by a layer of the thermoplastic polymer having a positive glass transition temperature;
- a second layer comprising the unsaturated thermoplastic styrene elastomer, having a negative glass transition temperature, is deposited on the thread thus covered; and
- the assembly undergoes a thermo-oxidative treatment in order to bond the two layers together.
